# EUROPEAN PATENT SPECIFICATION

(11) **EP 3 779 220 B1**
(45) Date of publication and mention of the grant of the patent: **05.07.2023**
(21) Application number: 19775338.7
(22) Date of filing: 27.03.2019
(51) Int. Cl.: F16C 33/46, F16C 19/36, F16C 43/06, F16C 33/58

(54) **TAPERED ROLLER BEARING**
KEGELROLLENLAGER
ROULEMENT À ROULEAUX CONIQUES

(30) Priority: 28.03.2018 JP 2018061826
(43) Date of publication of application: 17.02.2021
(73) Proprietor: NTN Corporation, Osaka-shi, Osaka 550-0003 (JP)
(72) Inventor: WAKISAKA Takashi, Kuwana-shi, Mie 511-8678 (JP)
(74) Representative: Grünecker Patent- und Rechtsanwälte PartG mbB
(86) International application number: PCT/JP2019/013475
(87) International publication number: WO 2019/189520

(56) References cited:
- EP-A1- 2 940 323
- WO-A1-2017/047727
- DE-T5-112016 001 671
- JP-A- 2014 139 474
- JP-A- 2015 124 796
- JP-A- 2016 008 642
- JP-A- 2016 200 227
- JP-A- 2016 200 227
- JP-U- S6 149 128

## Description

### TECHNICAL FIELD

The present invention relates to a tapered roller bearing for use in speed reducers incorporated in robots or construction equipment, and more specifically relates to a tapered roller bearing for use in high moment-load applications which require high load capacity, high stiffness and compactness.

### BACKGROUND ART

As a tapered roller bearing of this kind, for use in applications which require high load capacity, high stiffness and compactness, Patent Literature 1 or Patent Literature 2 discloses an arrangement in which: an inner ring which has a large-diameter end portion and a small-diameter end portion is provided with a radially outward protruding flange portion only on the large-diameter end portion; the small-diameter end portion of the inner ring no longer has a small flange; and rollers are increased in their length as much as the eliminated small flange.

The tapered roller bearing 1 disclosed in Patent Literature 1 or Patent Literature 2 includes, as shown in Fig. 8: an outer ring 2 having an inner circumferential surface formed with an outer ring track surface 2a; an inner ring 3 having an outer circumferential surface formed with an inner ring track surface 3a; a plurality of tapered rollers 4 disposed rollably between the outer ring track surface 2a and the inner ring track surface 3a; and a retainer 10 having a plurality of pockets P for holding the plurality of tapered rollers 4 at a predetermined interval. The inner ring 3 has a large-diameter end portion and a small-diameter end portion; only the large-diameter end portion is provided with an radially outward protruding large flange portion 3b; the small-diameter end portion of the inner ring 3 no longer has a small flange, and the tapered rollers 4 have an increased length which is longer as much as the eliminated small flange, for high load capacity.

Also, the bearing has a steep contact angle α of 35° through 55°, for high moment stiffness.

### CITATION LIST

### PATENT LITERATURE

Patent Literature 1: International Publication 2014/104132
Patent Literature 2: International Publication 2014/163177

A similar tapered roller bearing having fall-out prevention tabs is disclosed in document JP2016200227 A.

### SUMMARY OF INVENTION

### TECHNICAL PROBLEM

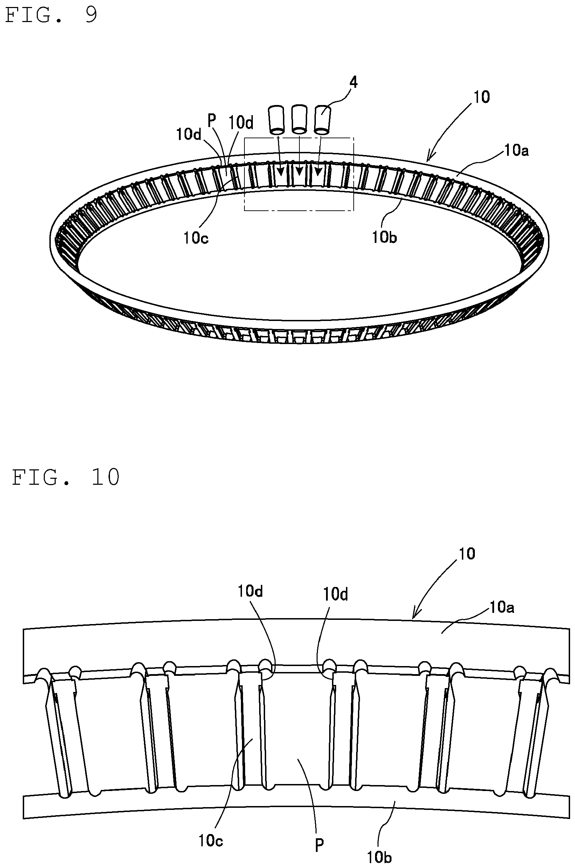

As shown in Fig. 9 and Fig. 10, the retainer 10 of the tapered roller bearing 1 has: a large-diameter ring portion 10a on the large-diameter side; a small-diameter ring portion 10b on the small-diameter side; and a plurality of pillar portions 10c which are provided equidistantly in a circumferential direction, connecting between the large-diameter ring portion 10a and the small-diameter ring portion 10b. The pockets Pare formed by mutually opposing wall surfaces of mutually adjacent two pillar portions 10c, an inner circumferential surface of the large-diameter ring portion 10a, and an outer circumferential surface of the small-diameter ring portion 10b. In order to prevent the tapered rollers 4 assembled in the pockets P from falling onto a diametrically inner surface side, fall-out prevention tabs 10d are provided on the diametrically inner surface side of the pillar portions 10c.

When assembling the tapered roller bearing 1, first, as shown in Fig. 9, the tapered rollers 4 are placed into the pockets P from the diametrically inner surface side of the retainer 10, to build a roller-retainer assy.

However, since the fall-out prevention tabs 10d which are configured to hold the tapered rollers 4 inside the pockets P are provided on the diametrically inner surface side of the large-diameter end portion of the pillar portions 10c of the pockets P, even if the tapered rollers 4 are inversely placed with the large-diameter side and the small-diameter side flipped upside down when being placed into the pockets P from the diametrically inner surface side of the retainer 10, placement margins between the tapered rollers 4 and the pillar portions 10c are small, and there is a chance that the tapered rollers 4 will be wrongly placed easily into the pockets P.

Also, since the fall-out prevention tabs 10d which are configured to hold the tapered rollers 4 inside the pockets P are provided only on the diametrically inner surface side of the large-diameter end portions of the pillar portions of the pockets P, there is another problem that retainability of the tapered rollers 4 are low, i.e., the tapered rollers 4 can fall off the pockets P easily.

It is therefore an object of the present invention to make it difficult to place the tapered rollers into the pockets if the tapered rollers are inversely placed with their large-diameter side and the small-diameter side flipped upside down when being placed into the pockets from the diametrically inner surface side of the retainer, which prevents the tapered rollers from being mistakenly assembled upside down in the pockets. Another object is to increase retainability of the tapered rollers, thereby to prevent the tapered rollers from falling off the pockets.

### SOLUTION TO PROBLEM

In order to solve the above described problems, the present invention provides a tapered roller bearing which includes: an outer ring having an inner circumferential surface formed with an outer ring track surface, an inner ring having an outer circumferential surface formed with an inner ring track surface, a row of tapered rollers disposed rollably between the outer ring track surface and the inner ring track surface, and a retainer made of a resin and having a plurality of pockets for holding the tapered rollers of the row of tapered rollers at a predetermined interval; and the tapered roller bearing having a contact angle not smaller than 35°. In this arrangement, the retainer includes: a large-diameter ring portion on its large-diameter side, a small-diameter ring portion on its small-diameter side, and a plurality of pillar portions provided equidistantly in a circumferential direction, connecting the large-diameter ring portion and the small-diameter ring portion; and each pocket is formed by mutually opposing wall surfaces of mutually adjacent pair of pillar portions, an inner circumferential surface of the large-diameter ring portion and an outer circumferential surface of the small-diameter ring portion; and each pillar portion has, on its diametrically inner surface side at its small-diameter end portion, a fall-out prevention tab for preventing the tapered roller placed inside the pocket from falling onto the diametrically inner surface side.

It is preferable that the fall-out prevention tab provided on the diametrically inner surface side of the small-diameter end portion of the pillar portion is within a range of 10% through 40% of the length L of the pocket from the diametrically inner surface end portion of the small-diameter side of the pocket, and more specifically is within a range of 10% through 20%.

It is preferable that the pillar portion also has, on the diametrically inner surface side of its large-diameter end portion, a fall-out prevention tab for preventing the tapered roller placed inside the pocket from falling onto the diametrically inner surface side.

It is preferable that the mutually adjacent pair of pillar portions have tapered roller guide surfaces on the diametrically outer side of their mutually opposing surfaces, and each tapered roller guide surface has a length in a range of 50 through 90% of the length of the pocket.

### ADVANTAGEOUS EFFECTS OF INVENTION

As described above, the tapered roller bearing according to the present invention has the fall-out prevention tab on the diametrically inner surface side of the small-diameter end portion of the pillar portion of the retainer. Therefore, there will be a large placement margin between the large-diameter portion of the tapered rollers and the fall-out prevention tabs of the small-diameter end portion of the pocket if the tapered roller is inversely placed with its large-diameter side and the small-diameter side flipped upside down when being placed into the pocket from the diametrically inner surface side of the retainer. Hence, it is possible to prevent inversed assembling of the tapered roller.

### BRIEF DESCRIPTION OF DRAWINGS

Fig. 1 is an enlarged partial sectional view of a tapered roller bearing according to an embodiment of the present invention, taken by cutting along a pillar portion of a retainer.
Fig. 2 is a perspective view of the retainer of the tapered roller bearing according to the embodiment in Fig. 1.
Fig. 3 is an enlarged view of a portion surrounded with an alternate long and short dash lines in Fig. 2.
Fig. 4 is an enlarged partial sectional view showing a pocket of the retainer of the tapered roller bearing according to the embodiment in Fig. 1.
Fig. 5 is an enlarged partial sectional view of a tapered roller bearing according to another embodiment of the present invention, taken by cutting along a pillar portion of a retainer.
Fig. 6 is an enlarged partial sectional view of a tapered roller bearing according to another embodiment of the present invention, taken by cutting along a pillar portion of a retainer.
Fig. 7 is an enlarged partial sectional view of a tapered roller bearing according to another embodiment of the present invention, taken by cutting along a pillar portion of a retainer.

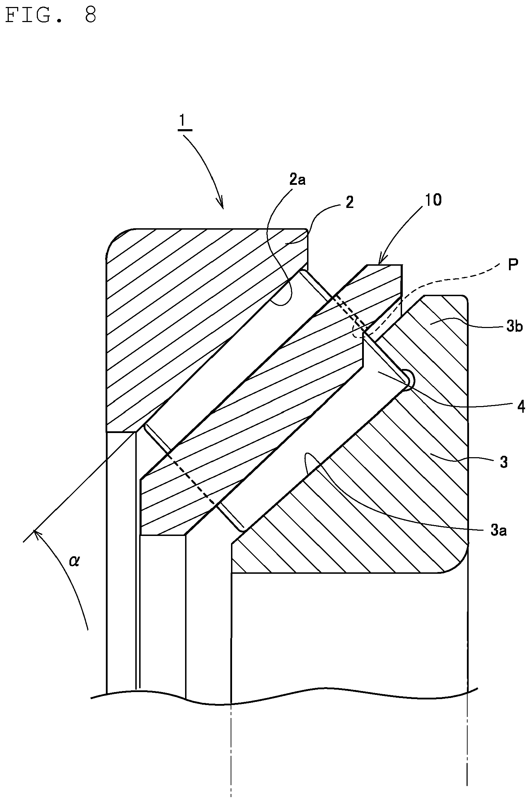

Fig. 8 is an enlarged partial sectional view of a conventional tapered roller bearing, taken by cutting along a pillar portion of a retainer.
Fig. 9 is a perspective view of the retainer of the conventional tapered roller bearing.
Fig. 10 is an enlarged view of a portion surrounded with an alternate long and short dash lines in Fig. 9.

### DESCRIPTION OF EMBODIMENTS

Hereinafter, the embodiments of the present invention will be described with reference to the attached drawings.

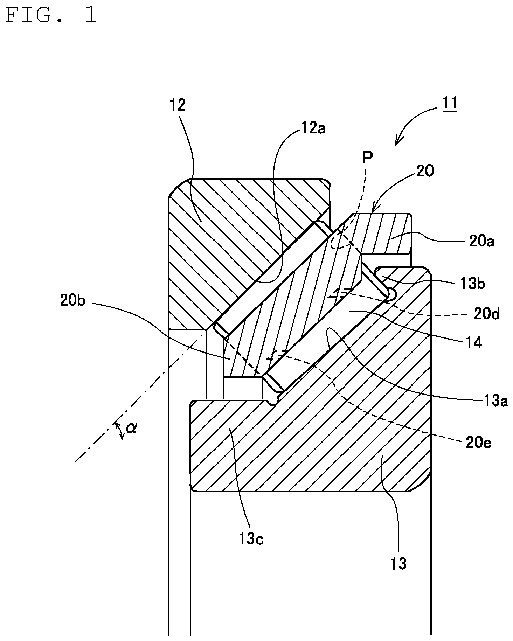

A tapered roller bearing 11 according to the present invention has a steep-slope contact angle α not smaller than 35°. Tapered roller bearings 11 according to embodiments shown in Fig. 1 through Fig. 7 each has a contact angle α of 45°.

The tapered roller bearing 11 shown in Fig. 1of the present invention includes: an outer ring 12 which has an inner circumferential surface formed with an outer ring track surface 12a, an inner ring 13 which has an outer circumferential surface formed with an inner ring track surface 13a, a row of tapered rollers disposed rollably between the outer ring track surface 12a and the inner track surface 13a, and a retainer 20 which has a plurality of pockets P for holding the tapered rollers 14 of the row of tapered rollers at a predetermined interval.

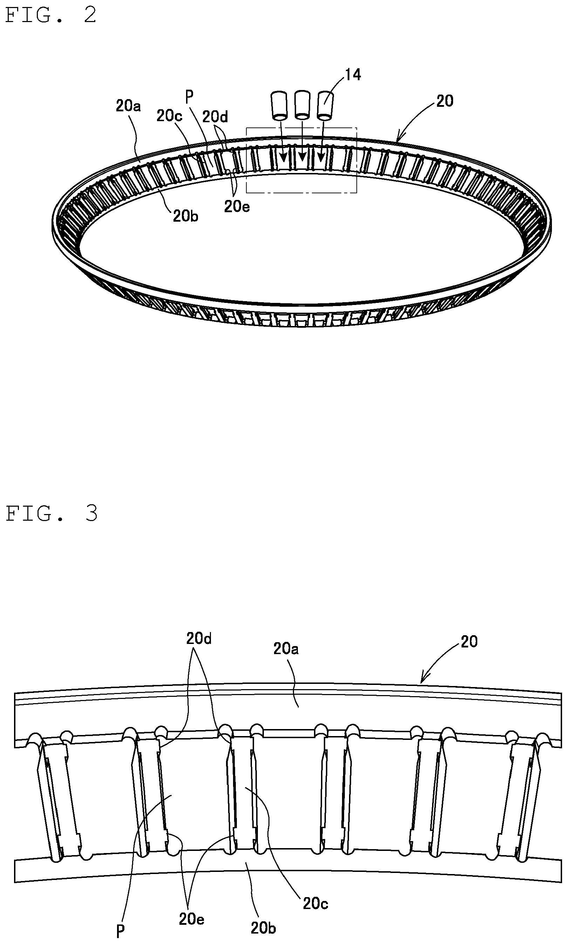

As shown in Fig. 2 and Fig. 3, the retainer 20 has: a large-diameter ring portion 20a on its large-diameter side, a small-diameter ring portion 10b on its small-diameter side, and a plurality of pillar portions 20c provided equidistantly in a circumferential direction, connecting between the large-diameter ring portion 20a and the small-diameter ring portion 20b. Each of the pockets P is formed by mutually opposing wall surfaces of mutually adjacent pair of pillar portions 20c, an inner circumferential surface of the large-diameter ring portion 20a, and an outer circumferential surface of the small-diameter ring portion 20b.

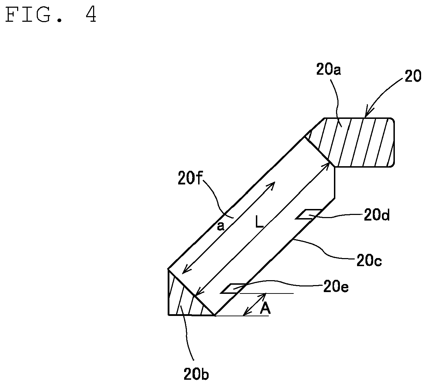

As shown in Fig. 4, diametrically inner surfaces of the large-diameter ring portion 20a and the small-diameter ring portion 20b of the retainer 20 are formed parallel to the axis of the inner ring 13.

Each pair of mutually adjacent pillar portions 20c have the mutually opposing surfaces, and on the outer diameter side thereof, guide surfaces 20f for the tapered roller 14 is provided. When a length α of the guide surface 20f is set to 50 through 90% of a length L of the pocket P, the attitude of the retainer 20 during operation is stable.

The pillar portion 20c has, on the diametrically inner surface side of its large-diameter end portion, a fall-out prevention tab 20d for preventing the tapered roller 14 assembled in the pocket P from falling onto the diametrically inner surface side.

Further, in the present invention, the pillar portion 20c has, on the diametrically inner surface side of its small-diameter end portion, a fall-out prevention tab 20e for preventing the tapered roller 14 assembled in the pocket P from falling onto the diametrically inner surface side. As described above, providing the fall-out prevention tab 20e on the diametrically inner surface side of the small-diameter end portion of the pillar portion 20c of the pockets P provides a large placement margin between the large-diameter portion of the tapered roller 14 and the fall-out prevention tab 20e of the small-diameter end portion of the pocket P if the tapered roller 14 is inversely placed with its large-diameter side and the small-diameter side flipped upside down when being placed into the pocket P from the diametrically inner surface side of the retainer 20, and therefore, invert assembling of the tapered roller 14 is prevented.

This invert-assembling prevention effect of the tapered roller 14 becomes higher if the fall-out prevention tab 20e at the small-diameter end portion of the pocket P is provided closer to the small-diameter side of the pockets P.

This invert-assembling prevention effect of the tapered roller 14 is related to: a distance A from the diametrically inner surface end portion of the small-diameter side of the pocket P to the fall-out prevention tab 20e; and a length L of the pocket P as shown in Fig. 4. Table 1 shows evaluation results of the relationships.

**[Table 1]**

| A | Invert-assembling prevention effect |
|---|---|
| 0.6 × L | × |
| 0.5 × L | × |
| 0.4 × L | ○ |
| 0.3 × L | ○ |
| 0.2 × L | ⊚ |
| 0.1 × L | ⊚ |

In Table 1, a symbol ⊚ means that the invert-assembling prevention effect is high; ○ means that there is some invert-assembling prevention effect; and × means that there is no invert-assembling prevention effect.

As understood from Table 1, the evaluation results show that there is some invert-assembling prevention effect if the distance A from the diametrically inner surface end portion on the small-diameter side of the pocket P to the fall-out prevention tabs 20e is within the range of 10% through 40% of the length L of the pocket P, and the invert-assembling prevention effect is particularly high in the range of 10% through 20% of the length L of the pocket P.

According to the present invention, fall-out prevention tabs 20d, 20e for preventing the tapered rollers 14 assembled in the pockets P from falling onto the diametrically inner surface side are provided at the large-diameter end portion and the small-diameter end portion on the diametrically inner surface of the pillar portions 20c. Therefore, it is possible to retain the tapered rollers 14 stably in the pockets P, which leads to stable attitude of the retainer 20 during operation, resulting in such benefit as reduced waggle in rotation and less chance of breakage of the retainer 20.

The tapered roller bearing 11 according to an embodiment shown in Fig. 1 has, at a large-diameter end portion of the inner ring 13, a large flange portion 13b which protrudes radially outward and holds a large-diameter end surface of the tapered roller 15; and at a small-diameter side of the inner track surface 13a of the inner ring 13, a small-diameter protrusion 13c which protrudes axially.

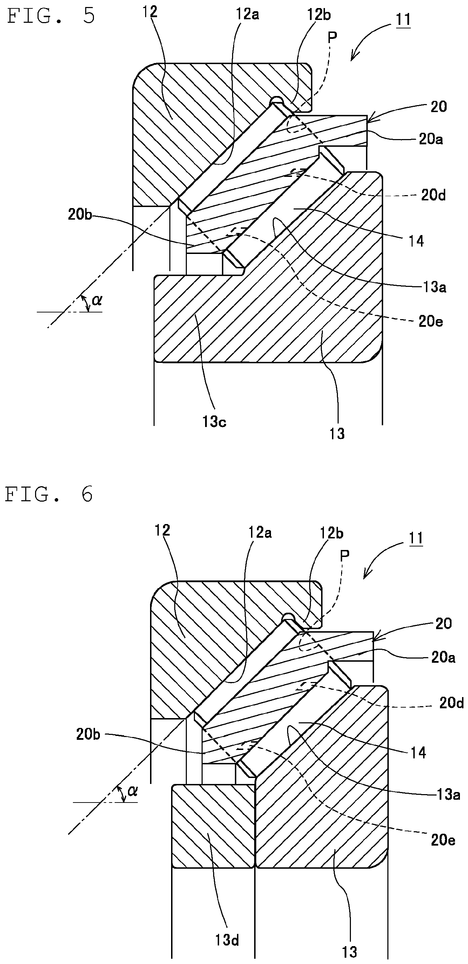

A tapered roller bearing 11 according to an embodiment shown in Fig. 5 has, at a large-diameter end portion of the outer ring 12, a large flange portion 12b which protrudes radially inward and holds a large-diameter end surface of the tapered roller 15; but a large flange portion for holding a large-diameter end surface of the tapered roller 15 is not provided at a large-diameter end portion of the inner ring 13. Like the embodiment shown in Fig. 1, an axially protruding small-diameter protrusion 13c is provided on the small-diameter side of the inner ring track surface 13a of the inner ring 13.

A tapered roller bearing 11 according to an embodiment shown in Fig. 6 has, at a large-diameter end portion of the outer ring 12, a large flange portion 12b which protrudes radially inward and holds a large-diameter end surface of the tapered roller 15, and is similar to the embodiment shown in fig. 5 in that a large flange portion for holding a large-diameter end surface of the tapered roller 15 is not provided at a large-diameter end portion of the inner ring 13. The embodiment shown in Fig. 6 differs from the embodiment shown in Fig. 5 in that an axially protruding small-diameter ring portion 13d is provided separately from the inner ring 13 on the small-diameter side of the inner ring track surface 13a of the inner ring 13.

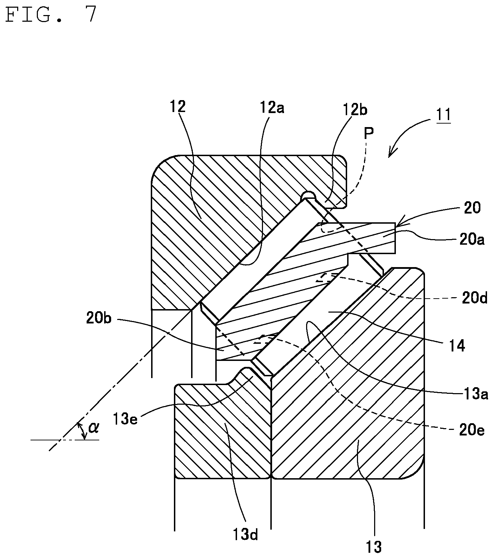

A tapered roller bearing 11 according to an embodiment shown in Fig. 7 has, at a large-diameter end portion of the outer ring 12, a large flange portion 12b which protrudes radially inward and holds a large-diameter end surface of the tapered roller 15, and is similar to the embodiment shown in fig. 6 in that a large flange portion for holding a large-diameter end surface of the tapered roller 15 is not provided at a large-diameter end portion of the inner ring 13, and an axially protruding small-diameter ring portion 13d is provided separately from the inner ring 13 on the small-diameter side of the inner ring track surface 13a of the inner ring 13. This tapered roller bearing 11 according to the embodiment shown in Fig. 7 has a radially outward protruding small flange portion 13e at an end portion closer to the inner ring 13 of the small-diameter protrusion 13c.

The present invention is not limited to any of the embodiments described thus far, and it is obvious that the invention may be implemented in various other ways within the scope of the present invention. The scope of the present invention is defined by the appended claims.

### REFERENCE SIGNS LIST

- 11:: Bearing
- 12:: Outer Ring
- 12a:: Outer Ring Track Surface
- 13:: Inner Ring
- 13a:: Inner Ring Track Surface
- 13c:: Small-Diameter Protrusion
- 20:: Retainer
- 20a:: Large-Diameter Ring Portion
- 20b:: Small-Diameter Ring Portion
- 20c:: Pillar Portion
- 20d:: Fall-Out Prevention Tab
- 20e:: Fall-Out Prevention Tab
- 20f:: Guide Surface
- P:: Pocket
- α: Contact Angle

## Claims

1. A tapered roller bearing (11) comprising:
an outer ring (12) having an inner circumferential surface formed with an outer ring track surface (12a),
an inner ring (13) having an outer circumferential surface formed with an inner ring track surface (13a),
a row of tapered rollers (14) disposed rollably between the outer ring track surface (12a) and the inner ring track surface (13a), and
a retainer (20) made of a resin and having a plurality of pockets (P) for holding the tapered rollers (14) of the row of tapered rollers (14) at a predetermined interval;
and the tapered roller bearing (11) having a contact angle not smaller than 35°;
wherein the retainer (20) includes: a large-diameter ring portion (20a) on its large-diameter side, a small-diameter ring portion (20b) on its small-diameter side, and a plurality of pillar portions (20c) provided equidistantly in a circumferential direction, connecting the large-diameter ring portion (20a) and the small-diameter ring portion (20b);
each pocket (P) is formed by mutually opposing wall surfaces of the mutually adjacent pair of pillar portions (20c), an inner circumferential surface of the large-diameter ring portion (20a), and an outer circumferential surface of the small-diameter ring portion (20b); and the pillar portion (20c) has, on the diametrically inner surface side of its large-diameter end portion, a fall-out prevention tab (20d) for preventing the tapered roller (14) placed inside the pocket (P) from falling onto the diametrically inner surface side; and
each pillar portion (20c) has, on the diametrically inner surface side of its small-diameter end portion, a fall-out prevention tab (20e) for preventing the tapered roller (14) placed inside the pocket (P) from falling onto the diametrically inner surface side **characterized in that** the distance (A) from the diametrically inner surface end portion on the small-diameter side of the pocket to the fall-out prevention tab (20e) is within a range of 10% through 40% of a length L of the pocket (P) from the diametrically inner surface end portion on the small-diameter side of the pocket (P).

2. The tapered roller bearing (11) according to Claim 1, wherein the fall-out prevention tab (20e) provided on the diametrically inner surface side of the small-diameter end portion of the pillar portion (20c) is within a range of 10% through 20% of a length L of the pocket (P) from the diametrically inner surface end portion on the small-diameter side of the pocket (P).

3. The tapered roller bearing (11) according to one of Claims 1 and 2 wherein the mutually adjacent pair of pillar portions (20c) have tapered roller guide surfaces (20f) on their outer diameter side of their opposing surfaces, and each tapered roller guide surface (20f) has a length in a range of 50 through 90% of the length of the pocket (P).

## Patentansprüche

1. Ein Kegelrollenlager (11), bestehend aus:
einen Außenring (12) mit einer inneren Umfangsfläche, die mit einer äußeren Ringbahnfläche (12a) ausgebildet ist,
einen Innenring (13) mit einer äußeren Umfangsfläche, die mit einer Innenringlauffläche (13a) versehen ist,
eine Reihe von konischen Rollen (14), die abrollbar zwischen der äußeren Ringlauffläche (12a) und der inneren Ringlauffläche (13a) angeordnet sind, und
einen Halter (20), der aus einem Harz hergestellt ist und eine Vielzahl von Taschen (P) zum Halten der Kegelrollen (14) der Reihe von Kegelrollen (14) in einem vorbestimmten Abstand aufweist;
und das Kegelrollenlager (11) einen Kontaktwinkel von mindestens 35° aufweist;
wobei der Halter (20) umfasst: einen Ringabschnitt (20a) mit großem Durchmesser auf seiner Seite mit großem Durchmesser, einen Ringabschnitt (20b) mit kleinem Durchmesser auf seiner Seite mit kleinem Durchmesser, und eine Vielzahl von Säulenabschnitten (20c), die äquidistant in einer Umfangsrichtung vorgesehen sind und den Ringabschnitt (20a) mit großem Durchmesser und den Ringabschnitt (20b) mit kleinem Durchmesser verbinden;
jede Tasche (P) durch einander gegenüberliegende Wandflächen des einander benachbarten Paares von Säulenabschnitten (20c), eine innere Umfangsfläche des Ringabschnitts (20a) mit großem Durchmesser und eine äußere Umfangsfläche des Ringabschnitts (20b) mit kleinem Durchmesser gebildet wird; und
der Säulenabschnitt (20c) an der diametral inneren Oberflächenseite seines Endabschnitts mit großem Durchmesser eine Herausfallverhinderungslasche (20d) aufweist, um zu verhindern, dass die in der Tasche (P) angeordnete Kegelrolle (14) auf die diametral innere Oberflächenseite fällt; und
jeder Säulenabschnitt (20c) hat, auf der diametral inneren Oberflächenseite seines Endabschnitts mit kleinem Durchmesser, eine Herausfallverhinderungslasche (20e), um zu verhindern, dass die in der Tasche (P) angeordnete Kegelrolle (14) auf die diametral innere Oberflächenseite fällt, **dadurch gekennzeichnet, dass** der Abstand des Endabschnitts der diametral inneren Oberfläche auf der Seite mit kleinem Durchmesser der Tasche zu der Herausfallverhinderungslasche (20e) innerhalb eines Bereichs von 10 % bis 40 % einer Länge L der Tasche (P) von dem Endabschnitt der diametral inneren Oberfläche auf der Seite mit kleinem Durchmesser der Tasche (P) ist.

2. Der Kegelrollenlager (11) nach Anspruch 1, wobei die Ausfallsicherungslasche (20e), die an der diametral inneren Oberflächenseite des Endabschnitts mit kleinem Durchmesser des Säulenabschnitts (20c) vorgesehen ist, innerhalb eines Bereichs von 10 % bis 20 % einer Länge L der Tasche (P) von dem diametral inneren Oberflächenendabschnitt an der Seite mit kleinem Durchmesser der Tasche (P) liegt.

3. Der Kegelrollenlager (11) nach einem der Ansprüche 1 und 2, wobei das einander benachbarte Paar von Säulenabschnitten (20c) an der Außendurchmesserseite ihrer gegenüberliegenden Flächen Kegelrollenführungsflächen (20f) aufweist und jede Kegelrollenführungsfläche (20f) eine Länge in einem Bereich von 50 bis 90 % der Länge der Tasche (P) hat.

## Revendications

1. Roulement à rouleaux coniques (11) comprenant :
une bague externe (12) comportant une surface circonférentielle interne formée avec une surface de chemin de roulement de bague externe (12a),
une bague interne (13) comportant une surface circonférentielle externe formée avec une surface de chemin de roulement de bague interne (13a),
une rangée de rouleaux coniques (14) disposés de façon à pouvoir rouler entre la surface de chemin de roulement de bague externe (12a) et la surface de chemin de roulement de bague interne (13a), et
une pièce de retenue (20) constituée d'une résine et comportant une pluralité de logements (P) pour maintenir les rouleaux coniques (14) de la rangée de rouleaux coniques (14) à un intervalle prédéterminé ;
le roulement à rouleaux coniques (11) présentant un angle de contact supérieur ou égal à 35° ;
dans lequel la pièce de retenue (20) comprend : une portion de bague de grand diamètre (20a) sur son côté de grand diamètre, une portion de bague de petit diamètre (20b) sur son côté de petit diamètre, et une pluralité de portions de pilier (20c) disposées de manière équidistante dans une direction circonférentielle, connectant la portion de bague de grand diamètre (20a) et la portion de bague de petit diamètre (20b) ;
chaque logement (P) est formé par des surfaces de paroi mutuellement opposées de la paire mutuellement adjacente de portions de pilier (20c), une surface circonférentielle interne de la portion de bague de grand diamètre (20a), et une surface circonférentielle externe de la portion de bague de petit diamètre (20b) ; et
la portion de pilier (20c) présente, sur le côté de surface diamétralement interne de sa portion d'extrémité de grand diamètre, une languette de prévention de chute (20d) pour empêcher le rouleau conique (14) placé à l'intérieur du logement (P) de tomber sur le côté de surface diamétralement interne ; et
chaque portion de pilier (20c) présente, sur le côté de surface diamétralement interne de sa portion d'extrémité de petit diamètre, une languette de prévention de chute (20e) pour empêcher le rouleau conique (14) placé à l'intérieur du logement (P) de tomber sur le côté de surface diamétralement interne,
**caractérisé en ce que** la distance (A) entre la portion d'extrémité de surface diamétralement interne sur le côté de petit diamètre du logement et la languette de prévention de chute (20e) est comprise dans une plage de 10 % à 40 % d'une longueur L du logement (P) à partir de la portion d'extrémité de surface diamétralement interne sur le côté de petit diamètre du logement (P).

2. Roulement à rouleaux coniques (11) selon la revendication 1, dans lequel la languette de prévention de chute (20e) pourvue sur le côté de surface diamétralement interne de la portion d'extrémité de petit diamètre de la portion de pilier (20c) est comprise dans une plage de 10 % à 20 % d'une longueur L du logement (P) à partir de la portion d'extrémité de surface diamétralement interne du côté de petit diamètre du logement (P).

3. Roulement à rouleaux coniques (11) selon l'une des revendications 1 et 2, dans lequel les portions de la paire mutuellement adjacente de portions de pilier (20c) comportent des surfaces de guidage de rouleau conique (20f) sur le côté diamètre externe de leurs surfaces opposées, et chaque surface de guidage de rouleau conique (20f) présente une longueur comprise dans une plage de 50 % à 90 % de la longueur du logement (P).
